# EUROPEAN PATENT APPLICATION

(11) **EP 3 982 376 A1**
(43) Date of publication of application: **13.04.2022**
(21) Application number: 20200413.1
(22) Date of filing: 06.10.2020
(51) Int. Cl.: H01B 3/44, C08L 23/08, C08L 33/08, C08L 33/10, H01B 7/14, H01B 7/28

(54) **CABLE**

(71) Applicant: Borealis AG, 1020 Vienna (AT)
(72) Inventor: NILSSON, Ulf, 444 86 Stenungsund (SE); GALANTE, Francisco, 28035 Madrid (ES); SAITGALEEV, Aydar, 143962 Moscow (RU); SMEDBERG, Annika, 444 86 Stenungsund (SE)
(74) Representative: Dehns

(57) **Abstract**

Use of a cable, e.g. to carry power, in a salt water environment, e.g. in the sea or under the sea;
said cable comprising a conductor which is surrounded by at least an inner semiconductive layer, an insulation layer and an outer semiconductive layer in that order;
wherein said insulation layer comprises
(i) at least 60 wt% of a low density polyethylene homo or low density polyethylene copolymer with at least one polyunsaturated comonomer and optionally one or more further comonomers; and,
(ii) 10 to 35 wt% of a low density polyethylene copolymer of ethylene and at least one polar comonomer selected from the group consisting of an alkyl acrylate, an alkyl methacrylate or vinyl acetate.

## Description

The invention relates to a wet design cable for a salt water environment, in particular a wet design power cable for a salt water environment, comprising an insulation layer in which water tree retardation is effected using a polymer water tree retarder. In particular, the insulation layer of the cable of the invention comprises the combination of a LDPE homopolymer or LDPE copolymer and a polymer water tree retarder. The invention further relates to a process for the preparation of such a cable and the use of such a cable in a salt water environment.

### Background

A standard power cable comprises a conductor surrounded by an inner semiconductive shield (also called the conductor shield), insulation layer and outer semiconductive shield (also called the insulation shield) in that order. The cable may also be provided with additional layers, such as for instance a jacketing layer, as is well known in the art.

Where a cable will be used underwater or buried in the ground, it is known to sheath the cable with a water barrier layer, typically a metallic water barrier layer to protect the cable from problems caused by the ingress of water.

We call this a dry cable design. A dry cable construction or dry cable design refers therefore to a cable design where a moisture impervious layer is present around the cable core (the core is defined as conductor, inner semiconductive layer, insulation layer, outer semiconductive layer). Optionally also other layers could be present outside the cable core as well, such as a screen layer. A moisture impervious layer is a layer incapable of being penetrated by water.

Long-term field experience has shown that an extruded metal sheath, such as an extruded lead/lead alloy sheath or an extruded aluminium sheath, act as moisture impervious layers. When a cable design includes a water barrier layer different to an extruded metal sheath, tests to assess whether the construction is dry or not can be found in Cigre TB722. The moisture impervious layer is therefore preferably metallic.

A so-called wet design or wet construction is defined as a cable construction where the moisture impervious layer is absent. Such a design is therefore free of a moisture impervious layer such as an extruded metallic moisture impervious layer.

So in a dry cable design a barrier prevents water ingress into the cable but increases the raw material cost of the cable significantly. Such a barrier layer is also expensive to apply. Also, conventional water barrier layers are often made of lead which has significant environmental implications.

There is a need to identify a cable material system (i.e. materials for the insulation and semiconductive layers of a cable) that can be used in a cable in a "wet" design. In a wet design, the outer semiconductive layer may have no cover or there may be a screen or a jacket layer as the outermost layer. Such cables are advantageous in terms of raw material cost and manufacturing expense but cables without a water barrier layer must be rigorously tested in order to demonstrate that the cable exhibits sufficient water tolerance.

In the wet design cables therefore, care must be taken to maximise water tree retardant (WTR) properties in the insulation layer of the cable.

A limitation of polyethylenes is their tendency to be exposed, in the presence of water and under the action of electric fields, to the formation of bush-shaped defects, so-called water trees, which can lead to lower breakdown strength and possibly electric failure. This tendency is affected by the presence of inhomogeneities, microcavities and impurities in the material.

In electrically strained polymer materials, subjected to the presence of water, processes can occur which are characterized as "water treeing". It is known that insulated cables suffer from shortened service life when installed in an environment where the polymer is exposed to water, e.g. under ground or at locations of high humidity.

In principle, it is possible to differentiate between two types of water trees:
"Vented trees" which have their starting point on the surface of the semiconductive screens and extend into the insulation material and "Bow-tie trees" which are initiated within the insulation material.

The water tree structure constitutes local damage leading to reduced dielectric strength.

Various water tree retarders are well known in the art. There are many literature disclosures of the addition of water tree retarders to cables to minimise water trees. In EP1731566, the combination of an unsaturated polyolefin with a particular vinyl content with a polar copolymer is taught to reduce wet aging.

WO2010/112333 describes a cable comprising a conductor surrounded by a semiconductive layer and an insulation layer wherein the semiconductive layer consists of a composition (A) comprising a polar copolymer (a) and carbon black, and the insulation layer consists of a composition (B) comprising a polar copolymer wherein the difference of the melting temperature of said polar copolymer (a) and the melting temperature Tm(b2) of said polar copolymer (b2) is less than 25°C.

The present inventors are particular concerned with wet aging in salt water, in particular sea water. Salt water tends to exacerbate the problem of water treeing in cables so the design of cables that might be exposed to salt water is challenging.

Salt water contains dissolved salts such as sodium chloride. As well as sodium chloride, salt water can comprise magnesium, calcium, potassium and sulphate ions amongst others. These dissolved salts can have a significant impact on water treeing in a wet design cable. Salt water is a much more aggressive environment than, for example, fresh water. It does not follow that a material that can operate in a fresh water environment can withstand exposure to sea water.

The present inventors have now found that the insulation layer of wet design cables suitable for salt water environments can comprise the combination of a LDPE homo or LDPE copolymer with a polyunsaturated comonomer and an LDPE copolymer with a polar comonomer. Said LDPE copolymer with a polar comonomer acts as a polymeric water tree retarder.

Wet design cables are discussed in Johansson et al 8th International Conference on Insulated Power Cables, Influence of subsea conditions on the long term performance of AC XLPE cables, Jicable' 11 - 19 - 23 June 2011, Versailles - France. The tested cables use a high performance water tree retardant, copolymer XLPE.

In Jicable '19, Paris 23-27 June 2019, Featherstone reports saline testing on wet design XLPE cables.

The combination however of the specific polymers in the insulation and semiconductive layers defined herein and their ability to resist dielectric breakdown in a salt water environment is new.

### Summary of Invention

Viewed from one aspect the invention provides the use of a cable, e.g. to carry power, in a salt water environment, e.g. in the sea or under the sea;
said cable comprising a conductor which is surrounded by at least an inner semiconductive layer, an insulation layer and an outer semiconductive layer in that order;
wherein said insulation layer comprises
(i) at least 60 wt% of a low density polyethylene homo or low density polyethylene copolymer with at least one polyunsaturated comonomer and optionally one or more further comonomers; and,
(ii) 10 to 35 wt% of a low density polyethylene copolymer of ethylene and at least one polar comonomer selected from the group consisting of an alkyl acrylate, an alkyl methacrylate or vinyl acetate.

Viewed from another aspect the invention provides the use of a cable, e.g. to carry power, in a salt water environment, e.g. in the sea or under the sea;
said cable comprising a conductor which is surrounded by at least an inner semiconductive layer, an insulation layer and an outer semiconductive layer in that order;
wherein said insulation layer comprises
(i) at least 60 wt% of a low density polyethylene homo or low density polyethylene copolymer with at least one polyunsaturated comonomer and optionally one or more further comonomers; and,
(ii) 10 to 35 wt% of a low density polyethylene copolymer of ethylene and at least one polar comonomer selected from the group consisting of an alkyl acrylate, an alkyl methacrylate or vinyl acetate; and
wherein said inner and outer semiconductive layers independently comprise:
(a) a low density polyethylene copolymer of ethylene and at least one polar comonomer selected from the group consisting of an alkyl acrylate, an alkyl methacrylate or vinyl acetate; and
(b) carbon black.

Viewed from one aspect the invention provides a cable comprising a conductor which is surrounded by at least an inner semiconductive layer, an insulation layer and an outer semiconductive layer in that order;
wherein said insulation layer comprises
(i) at least 60 wt% of a low density polyethylene homopolymer or low density polyethylene copolymer with at least one polyunsaturated comonomer and optionally one or more further comonomers; and,
(ii) 10 to 35 wt% of a low density polyethylene copolymer of ethylene and at least one polar comonomer selected from the group consisting of an alkyl acrylate, an alkyl methacrylate or vinyl acetate; and
wherein said inner and outer semiconductive layers independently comprise:
(c) a low density polyethylene copolymer of ethylene and at least one polar comonomer selected from the group consisting of an alkyl acrylate, an alkyl methacrylate or vinyl acetate; and
(d) carbon black.

The cable of the invention is ideally a wet design cable.

The cable of the invention is crosslinkable or crosslinked. In a further embodiment therefore the insulation layer comprises a peroxide and is crosslinkable. In a further embodiment the inner and/or outer semiconductive layer comprise a peroxide and are crosslinkable. In a further embodiment the insulation layer, inner and outer semiconductive layers comprise a peroxide and are crosslinkable. When subjected to crosslinking conditions, the crosslinkable cable can be crosslinked. The peroxide decomposes and generates free radicals that initiate a crosslinking reaction in the composition.

Viewed from another aspect the invention provides a crosslinked cable obtainable by the crosslinking of the crosslinkable cable as hereinbefore defined. Viewed from another aspect the invention provides the use of a crosslinked cable as hereinbefore defined, e.g. to carry power, in a salt water environment, e.g. in the sea or under the sea.

Viewed from another aspect the invention provides a process for producing a cable comprising a conductor surrounded by at least an inner semiconductive layer, an insulation layer, and an outer semiconductive layer in that order, wherein the process comprises the steps of
- extruding, such as coextruding, on a conductor an inner semiconductive layer, an insulation layer and outer semiconductive layer; and
   crosslinking one or more of said inner semiconductive layer, insulation layer and outer semiconductive layer;
   wherein said insulation layer comprises
   (i) at least 60 wt% of a low density polyethylene homopolymer or low density polyethylene copolymer with at least one polyunsaturated comonomer and optionally one or more further comonomers; and,
   (ii) 10 to 35 wt% of a low density polyethylene copolymer of ethylene and at least one polar comonomer selected from the group consisting of an alkyl acrylate, an alkyl methacrylate or vinyl acetate; and
   wherein said inner and outer semiconductive layers independently comprise:
   (a) a low density polyethylene copolymer of ethylene and at least one polar comonomer selected from the group consisting of an alkyl acrylate, an alkyl methacrylate or vinyl acetate; and
   (b) carbon black.

### Detailed description of the invention

The present invention provides a cable for use in a salt water environment, such as a crosslinkable cable or crosslinked cable, e.g. a crosslinkable or crosslinked power cable, comprising a conductor which is surrounded by at least an inner semiconductive layer, an insulation layer and an outer semiconductive layer. The invention also relates to a crosslinked cable comprising a conductor which is surrounded by at least an inner semiconductive layer, an insulation layer and an outer semiconductive layer.

The cable of the invention is preferably of wet design as hereinbefore defined. Ideally, the cable does not comprise a metallic water barrier layer. The cables of the invention, despite their wet design offer excellent resistance to water treeing in a salt water environment. This is demonstrated via an analysis of electrical breakdown strength after wet aging in salt water. Alternatively viewed therefore, the invention offers cables with improved electrical breakdown strength in a salt water environment.

Some experts regard the presence of a polymeric jacket over the outer semiconductive layer as a "semi wet" design as the jacket layer will limit rate of water vapour ingress. We regard such as a solution as a wet design herein as the jacketing layer is not water impervious.

### Insulation layer

The cable of the invention comprises an insulation layer comprising at least 60 wt% of a low density polyethylene homopolymer or a low density copolymer with at least one polyunsaturated comonomer and optionally a one or more further comonomers; and
10 to 35 wt% of a low density copolymer of ethylene and at least one polar comonomer selected from the group consisting of an alkyl acrylate, an alkyl methacrylate or vinyl acetate.

### Low density polyethylene homopolymer or copolymer with at least one polyunsaturated comonomer and optionally one or more further comonomers

Component (i) of the insulation layer is an LDPE homopolymer or LDPE copolymer with at least one polyunsaturated comonomer and optionally one or more further comonomers. This will be called LDPE polymer component (i) herein.

Although the term LDPE is an abbreviation for low density polyethylene, the term is understood not to limit the density range, but covers the LDPE-like high pressure (HP) polyethylenes. The term LDPE describes and distinguishes only the nature of HP polyethylene with typical features, such as different branching architecture, compared to the polyethylene produced in the presence of an olefin polymerisation catalyst.

It is preferred if LDPE polymer component (i) is an LDPE copolymer with at least one polyunsaturated comonomer.

In one embodiment, the low density polyethylene copolymer with at least one polyunsaturated comonomer and optionally one or more further comonomers of the insulation layer comprises fewer than 5 wt% polar comonomers selected from an alkyl acrylate, alkyl methacrylate or vinyl acetate. In one embodiment, the LDPE copolymer component (i) of the insulation layer comprises fewer than 3.0 wt%, preferably less than 2.0 wt%, especially less than 1.0 wt% of such polar comonomers.

Preferably, the LDPE copolymer component (i) is a binary copolymer of ethylene and one polyunsaturated comonomer only.

The polyunsaturated comonomer preferably consists of a straight carbon chain with at least 8 carbon atoms and at least 4 carbons between the non-conjugated double bonds, of which at least one is terminal. The polyunsaturated comonomer is preferably a diene, e.g., a diene which comprises at least eight carbon atoms, the first carbon-carbon double bond being terminal and the second carbon-carbon double bond being non-conjugated to the first one, e.g., a diene which is selected from C₈- to C₁₄-non-conjugated diene or mixtures thereof, for example, selected from 1,7-octadiene, 1,9-decadiene, 1,11-dodecadiene, 1,13-tetradecadiene, 7-methyl-1,6-octadiene, 9-methyl-1,8-decadiene, or mixtures thereof, e.g., from 1,7-octadiene, 1,9-decadiene, 1,11-dodecadiene, 1,13-tetradecadiene, or any mixture thereof.

If another comonomer is present, this may be a C₃ to C₁₀ alpha-olefin.

The LDPE copolymer component (i) preferably comprises 0.001 to 40 wt.-%, preferably 0.05 to 40 wt.-%, more preferably 0.05 to 30 wt.-%, still more preferably 1.0 to 30 wt%, still more preferably 1.0 to 20 wt% of one or more comonomer(s) in total (i.e. all comonomers). The polyunsaturated comonomer content is preferably 0.001 to 10 wt.-%, preferably 0.01 to 10 wt.-%, more preferably 0.01 to 5.0 wt.-%, still more preferably 0.01 to 3.0 wt%., especially 0.01 to 2.0 wt%, more especially 0.1 to 2.0 wt%. In some embodiments, the only comonomer present is a polyunsaturated comonomer.

The LDPE polymer component (i) is preferably unsaturated. It preferably has a total amount of carbon-carbon double bonds of more than 0.4/1000 carbon atoms, preferably more than 0.5/1000 carbon atoms, such as more than 0.6/1000 carbon atoms, especially more than 0.7/1000 carbon atoms, e.g. more than 0.8/1000 carbon atoms. The upper limit of the amount of carbon-carbon double bonds present in the polyolefin is not limited and may preferably be less than 5.0/1000 carbon atoms, preferably less than 3.0/1000 carbon atoms.

In some embodiments, the total amount of carbon-carbon double bonds, which originate from vinyl groups, vinylidene groups and *trans*-vinylene groups, if present, in the LDPE polymer component (i), is preferably higher than 0.50/1000 carbon atoms.

In some embodiments, the LDPE polymer component (i) contains at least vinyl groups and the total amount of vinyl groups is preferably higher than 0.05/1000 carbon atoms, still more preferably higher than 0.08/1000 carbon atoms, and most preferably of higher than 0.11/1000 carbon atoms. In some embodiments, the LDPE polymer component (i) contains at least vinyl groups and the total amount of vinyl groups is preferably higher than 0.15, such as higher than 0.20, more preferably higher than 0.25, especially higher than 0.35, most especially higher than 0.40/1000 C atoms.

Preferably, the total amount of vinyl groups is of lower than 4.0/1000 carbon atoms. More preferably, the LDPE polymer component (i), prior to crosslinking, contains vinyl groups in total amount of more than 0.20/1000 carbon atoms, still more preferably of more than 0.30/1000 carbon atoms, and most preferably of more than 0.40 vinyl/1000 carbon atoms, e.g. higher than 0.45 vinyl/1000C.

Preferably, the LDPE polymer component (i) has a melt flow rate MFR2.16/190°C of 0.1 to 50 g/10 min, preferably 0.3 to 20 g/10 min, more preferably 0.3 to 15 g/10 min, even more preferably 0.50 to 15 g/10 min, or 0.50 to 10 g/10 min. In some embodiments the MFR₂ is 0.50 to 8.0 g/10 min, preferably 0.50 to 6.0 g/10 min, most preferably 0.50 to 4.0 g/10 min.

Any LDPE polymer component (i) may have a density of 905 to 935 kg/m³, preferably 910 to 935 kg/m³, such as 910 to 928 kg/m³.

The insulation layer is preferably free of carbon black.

The insulation layer may comprise at least 60 wt% of the LDPE polymer component (i), such as at least 60 to 90 wt%, especially 70 to 85 wt%. It is possible to use a blend of LDPE polymers as component (i). Where a blend of LDPE polymers is used then this percentage refers to the sum of the LDPE polymers present.

The LDPE polymer component (i) generally forms the balance of the layer once other components are calculated.

### Polymer Water tree retarder: low density polyethylene copolymer of ethylene and at least one polar comonomer selected from the group consisting of an alkyl acrylate, an alkyl methacrylate or vinyl acetate

The insulation layer also comprises a low density polyethylene copolymer of ethylene and at least one polar comonomer selected from the group consisting of an alkyl acrylate, an alkyl methacrylate or vinyl acetate (component ii). This component is referred to as the polymer water tree retarder. It is possible to use a mixture of such compounds.

The low density polyethylene copolymer of ethylene and at least one polar comonomer selected from the group consisting of an alkyl acrylate, an alkyl methacrylate or vinyl acetate as the polymer water tree retarder can be the same or different as the low density polyethylene copolymer of ethylene and at least one polar comonomer selected from the group consisting of an alkyl acrylate, an alkyl methacrylate or vinyl acetate used in the inner and outer semiconductive layers. In general, the definition of the low density polyethylene copolymer of ethylene and at least one polar comonomer selected from the group consisting of an alkyl acrylate, an alkyl methacrylate or vinyl acetate offered below in the context of the inner and outer semiconductive layer applies to the polymeric water tree retarder component (ii) of the insulation layer.

The polar comonomer(s) of the low density polyethylene copolymer of ethylene and at least one polar comonomer selected from the group consisting of an alkyl acrylate, an alkyl methacrylate or vinyl acetate is preferably selected from C₁- to C₆-alkyl acrylates, C₁- to C₆-alkyl methacrylates or vinyl acetate. Still more preferably, the LDPE copolymer used is a copolymer of ethylene with C₁- to C₆-alkyl acrylate, such as methyl, ethyl, propyl or butyl acrylate, or vinyl acetate.

The use of ethylene methyl acrylate (EMA) copolymer, ethylene methyl methacrylate (EMMA) copolymer, ethylene ethyl acrylate (EEA) copolymer, ethylene ethyl methacrylate, ethylene butyl methacrylate, ethylene butyl acrylate (EBA) copolymer or ethylene vinyl acetate (EVA) copolymer is preferred.

The use of ethylene methyl acrylate (EMA), ethylene butyl acrylate (EBA) or ethylene ethyl acrylate (EEA) is especially preferred.

The low density polyethylene copolymer of ethylene and at least one polar comonomer of the insulation layer preferably comprises 0.001 to 40 wt.-%, more preferably 0.05 to 40 wt.-%, still more preferably 1 to 30 wt%, of one or more comonomer(s). The polar comonomer content is more preferably 5 to 30 wt%, 5 to 25 wt%, 5 to 20 wt% such as 7 to 25 wt%, especially 10 to 25 wt% or 10 to 30 wt%.

Preferably, the low density polyethylene copolymer of ethylene and at least one polar comonomer of the insulation layer has a melt flow rate MFR2.16/190°C of 0.1 to 50 g/10 min, more preferably 1.0 to 30 g/10 min, even more preferably 2.0 to 25 g/10 min, and most preferably 2.0 to 22 g/10 min. In still further preferred options, the low density polyethylene copolymer of ethylene and at least one polar comonomer of the insulation layer has an MFR2.16/190°C of 2 to 20 g/10min, preferably 2 to 17 g/10min, especially 2 to 15 g/10 min.

The LDPE copolymer may have a density of 910 to 940 kg/m³, preferably 915 to 940 kg/m³, such as 920 to 940 kg/m³.

The insulation layer may comprise 10 to 35 wt% of the low density polyethylene copolymer of ethylene and at least one polar comonomer (ii) such as 10 to 30 wt%, especially, 15 to 30 wt%. Where a blend of these polymers is used in component (ii) then this percentage refers to the sum of the low density polyethylene copolymer of ethylene and at least one polar comonomer present.

### Peroxide - insulation layer

The insulation layer may be crosslinkable or crosslinked. In such crosslinkable embodiments, it is preferred if the crosslinkable insulation layer comprises a peroxide. It is preferred if the crosslinkable insulation layer comprises a peroxide once the cable core structure has been formed. Mixtures of peroxides may be used.

The preferred crosslinking agent is an organic peroxide. Non-limiting examples are organic peroxides, such as di-tert-amylperoxide, 2,5-di(tert-butylperoxy)-2,5-dimethyl-3-hexyne, 2,5-di(tert-butylperoxy)-2,5-dimethylhexane, tert-butylcumylperoxide, di(tert-butyl)peroxide, dicumylperoxide, butyl-4,4-bis(tert-butylperoxy)-valerate, 1,1-bis(tert-butylperoxy)-3,3,5-trimethylcyclohexane, tert-butylperoxybenzoate, dibenzoylperoxide, bis(tert butylperoxyisopropyl)benzene, 2,5-dimethyl-2,5-di(benzoylperoxy)hexane, 1,1-di(tert-butylperoxy)cyclohexane, 1,1-di(tert amylperoxy)cyclohexane, or any mixtures thereof. Preferably, the peroxide is selected from 2,5-di(tert-butylperoxy)-2,5-dimethylhexane, di(tert-butylperoxyisopropyl)benzene, dicumylperoxide, tert-butylcumylperoxide, , or mixtures thereof. Most preferably, the peroxide is dicumylperoxide.

The peroxide is preferably present in the insulation layer in an amount of less than 3.0 wt.-%, more preferably 0.1-2.5 wt.-%, even more preferably 0.3-2.5 wt.-%. based on the weight of the insulation layer. Where a blend of peroxides is used then this percentage refers to the sum the peroxides present.

### Inner and outer semiconductive layers

The inner and outer semiconductive layers can be the same or different, preferably the same. By the same here means that the chemical composition of the inner and outer semiconductive layers is identical, prior to crosslinking. The inner and outer semiconductive layers are different to the insulation layer.

The semiconductive properties of the semiconductive layers result from the conducting component contained within the semiconductive layer, i.e. a carbon black.

It is preferred if both inner and outer semiconductive layers comprise an LDPE copolymer of ethylene and at least one polar comonomer selected from the group consisting of an alkyl acrylate, an alkyl methacrylate or vinyl acetate and carbon black. It is preferred if both layers comprise an LDPE copolymer of ethylene and at least one polar comonomer selected from the group consisting of an alkyl acrylate, an alkyl methacrylate or vinyl acetate, carbon black, a peroxide and optionally an antioxidant. The discussion which follows can apply to either or both of the semiconductive layers.

### Low density polyethylene (LDPE) copolymer of ethylene and at least one polar comonomer selected from the group consisting of an alkyl acrylate, an alkyl methacrylate or vinyl acetate

Said LDPE copolymer of the inner and/or outer semiconductive layer comprises a polar comonomer(s) is selected from the group of alkyl acrylates, alkyl methacrylates or vinyl acetate, or a mixture thereof. It is also possible to use a mixture of such LDPE copolymers.

Further preferably, said polar comonomer(s) is selected from C₁- to C₆-alkyl acrylates, C₁- to C₆-alkyl methacrylates or vinyl acetate. Still more preferably, the LDPE copolymer used in the inner and/or outer semiconductive layer is a copolymer of ethylene with C₁- to C₆-alkyl acrylate, such as methyl, ethyl, propyl or butyl acrylate, or vinyl acetate.

The use of ethylene methyl acrylate (EMA) copolymer, ethylene methyl methacrylate (EMMA) copolymer, ethylene ethyl methacrylate, ethylene butyl methacrylate, ethylene ethyl acrylate (EEA) copolymer, ethylene butyl acrylate (EBA) copolymer or ethylene vinyl acetate (EVA) copolymer is preferred.

The use of ethylene methyl acrylate (EMA), ethylene butyl acrylate (EBA) or ethylene ethyl acrylate (EEA) is especially preferred.

The LDPE copolymer of the inner and/or outer semiconductive layer preferably comprises 0.001 to 40 wt.-%, more preferably 0.05 to 40 wt.-%, still more preferably 1 to 30 wt%, of one or more comonomer(s). The polar comonomer content is more preferably 5 to 30 wt%, 5 to 25 wt%, 5 to 20 wt% such as 7 to 20 wt%.

Preferably, the LDPE copolymer of the inner and/or outer semiconductive layer has a melt flow rate MFR2.16/190°C of 0.1 to 50 g/10 min, more preferably 1.0 to 30 g/10 min, even more preferably 2.0 to 25 g/10 min, and most preferably 4.0 to 22 g/10 min

The LDPE copolymer may have a density of 910 to 940 kg/m³, preferably 915 to 940 kg/m³, such as 920 to 940 kg/m³.

The inner and/or outer semiconductive layer may comprise at least 50 wt% of the LDPE copolymer, such as at least 55 wt%. Where a blend of LDPE copolymers is used then this percentage refers to the sum the LDPE copolymers present.

In some embodiments, there is at least 60 wt% of the LDPE copolymer in the inner and/or outer semiconductive layer. The LDPE generally forms the balance of the layer once other components of the semiconductive layer are selected. The inner and/or outer semiconductive layer preferably contains no more than 90 wt% of the LDPE copolymer.

Any LDPE homopolymer or copolymer can be produced by any conventional polymerisation process. Preferably, it is produced by radical polymerisation, such as high pressure radical polymerisation. High pressure polymerisation can be effected in a tubular reactor or an autoclave reactor. Preferably, it is a tubular reactor. In general, the pressure can be within the range of 1200-3500 bars and the temperature can be within the range of 150°C-350°C. Further details about high pressure radical polymerisation are given in Encyclopedia of Polymer Science and Engineering, Vol. 6 (1986), pp 383-410 and Encyclopedia of Materials: Science and Technology, Elsevier Science Ltd.: "Polyethylene: High-pressure, R.Klimesch, D.Littmann and F.-O. Mähling pp. 7181-7184.2001, which is herewith incorporated by reference.

It is well known that e.g. propylene can be used as a comonomer or as a chain transfer agent (CTA), or both, whereby it can contribute to the total amount of the C-C double bonds, preferably to the total amount of the vinyl groups. Herein, during the polymerisation when a compound which can also act as comonomer, such as propylene, is used as CTA for providing double bonds, then said copolymerisable comonomer is not calculated to the comonomer content.

### Carbon Black

According to the present invention, the inner and outer semiconductive layers further comprise carbon black.

The semiconductive properties result from the carbon black added. Thus, the amount of carbon black is at least such that a semiconducting layer is obtained. Preferably, the inner and/or outer semiconductive layer comprises 10 to 60 wt%, preferably 15-48 wt% carbon black. In other preferred embodiments, the amount of carbon black is 10-45 wt.-%, such as 20-45 wt%, preferably 25-45 wt%, more preferably 25-40 wt%, or especially 30 to 41 wt%, based on the weight of the semiconductive layer.

Any carbon black can be used which is electrically conductive. Examples of suitable carbon blacks include furnace blacks and acetylene blacks. Mixtures may also be used. Where a blend of carbon blacks is used then this percentage refers to the sum of the carbon blacks present.

The carbon black may have a nitrogen surface area (BET) of 5 to 400 m²/g, for example of 10 to 300 m²/g, e.g. of 30 to 200 m²/g, when determined according to ASTM D3037-93. Further, the carbon black may have one or more of the following properties:
i) a primary particle size of at least 5 nm which is defined as the number average particle diameter according to ASTM D3849-95a,
ii) iodine adsorption number (IAN) of at least 10mg/g, for example 10 to 300 mg/g, e.g. 30 to 200 mg/g, when determined according to ASTM D-1510; and/or
iii) DBP (dibutyl phthalate) absorption number (= oil number) of at least 30 cm3/100g, for example 60 to 300 cm³/100g, e.g. 70 to 250 cm³/100g, for example 80 to 200 cm³/100g, e.g. 90 to 180 cm³/100g, when measured according to ASTM D 2414.

Furthermore, the carbon black may have one or more of the following properties:
a) a primary particle size of at least 5 nm which is defined as the number average particle diameter according ASTM D3849-95a;
b) iodine number of at least 30 mg/g according to ASTM D1510;
c) oil absorption number of at least 30 ml/100g which is measured according to ASTM D2414.

One group of suitable furnace blacks have a mean primary particle size of 28 nm or less. The mean primary particle size is defined as the number average particle diameter measured according to ASTM D3849-95a. Particularly suitable furnace blacks of this category may have an iodine number between 60 and 300 mg/g according to ASTM D1510. It is further suitable that the oil absorption number (of this category) is between 50 and 225 ml/100g, for example between 50 and 200 ml/100g and this is measured according to ASTM D2414.

Another group of equally suitable furnace blacks have a mean primary particle size of greater than 28 nm. The mean primary particle size is defined as the number average particle diameter according to ASTM D3849-95a. Suitable furnace blacks of this category have an iodine number between 30 and 200 mg/g according to ASTM D1510. Further the oil absorption number (of this category) is, for example, between 80 and 300 ml/100 g measured according to ASTM D2414.

Other suitable carbon blacks can be made by any other process or can be further treated.

Suitable carbon blacks for semiconductive cable layers are suitably characterized by their cleanliness. Therefore, suitable carbon blacks have an ash-content of less than 0.2 wt% measured according to ASTM D1506, a 325 mesh sieve residue of less than 30 ppm according to ASTM D1514 and have less than 1 wt% total sulphur according to ASTM D1619.

Furnace carbon black is generally acknowledged term for the well-known carbon black type that is produced in a furnace-type reactor. As examples of carbon blacks, the preparation process thereof and the reactors, reference can be made to i.a. EP-A-0629222 of Cabot, US 4,391,789, US 3,922,335 and US 3,401,020. As an example of commercial furnace carbon black grades described in ASTM D 1765-98b i.a. N351, N293 and N550, can be mentioned. Furnace carbon blacks are conventionally distinguished from acetylene carbon blacks which are another carbon black type suitable for the semiconductive layer. Acetylene carbon blacks are produced in an acetylene black process by reaction of acetylene and unsaturated hydrocarbons, e.g. as described in US 4,340,577.

Particularly, acetylene blacks may have a mean particle size of larger than 20 nm, for example 20 to 80 nm The mean primary particle size is defined as the number average particle diameter according to the ASTM D3849-95a. Suitable acetylene blacks of this category have an iodine number between 30 to 300 mg/g, for example 30 to 150 mg/g according to ASTM D1510. Further the oil absorption number (of this category) is, for example between 80 to 300 ml/100 g, e.g. 100 to 280 ml/100 g and this is measured according to ASTM D2414. Acetylene black is a generally acknowledged term and are very well known and e.g. supplied by Denka.

A further embodiment according to the present invention discloses a semiconductive layer, wherein the conducting component comprises or consists of a conductive carbon black, e.g. a carbon black with one or more, for example, all, of the following properties:
a primary particle size of at least 5 nm which is defined as the number average particle diameter according to ASTM D3849-95a;
an iodine adsorption number (IAN) of at least 10 mg/g, e.g., 10 to 300 mg/g, when determined according to ASTM D-1510; or
a DBP (dibutyl phthalate) absorption number (= oil absorption number) of at least 30 e.g. 60 to 300 when measured according to ASTM D 2414.

### Peroxide

The inner and/or outer semiconductive layer is crosslinkable or crosslinked. A peroxide is preferably present in the crosslinkable inner and/or outer semiconductive layer in an amount of less than 3.0 wt.-%, more preferably 0.1-2.5 wt.-%, even more preferably 0.3-2.5 wt.-% based on the weight of the semiconductive layer. In some embodiments the peroxide is present in 0.4 to 2.5 wt.-%, preferably 0.4 to 2.0 wt.-% based on the weight of the semiconductive layer. Where a blend of peroxides is used then this percentage refers to the sum the peroxides present.

The preferred crosslinking agent is an organic peroxide. Non-limiting examples are organic peroxides, such as di-tert-amylperoxide, 2,5-di(tert-butylperoxy)-2,5-dimethyl-3-hexyne, 2,5-di(tert-butylperoxy)-2,5-dimethylhexane, tert-butylcumylperoxide, di(tert-butyl)peroxide, dicumylperoxide, butyl-4,4-bis(tert-butylperoxy)-valerate, 1,1-bis(tert-butylperoxy)-3,3,5-trimethylcyclohexane, tert-butylperoxybenzoate, dibenzoylperoxide, bis(tert butylperoxyisopropyl)benzene, 2,5-dimethyl-2,5-di(benzoylperoxy)hexane, 1,1-di(tert-butylperoxy)cyclohexane, 1,1-di(tert amylperoxy)cyclohexane, or any mixtures thereof. Preferably, the peroxide is selected from 2,5-di(tert-butylperoxy)-2,5-dimethylhexane, di(tert-butylperoxyisopropyl)benzene, dicumylperoxide, tert-butylcumylperoxide, or mixtures thereof. Most preferably, the peroxide is bis(tert butylperoxyisopropyl)benzene.

### Antioxidant

Any layer of the cable can comprise an antioxidant. As antioxidant, sterically hindered or semi-hindered phenols, aromatic amines, aliphatic sterically hindered amines, organic phosphates, thio compounds, polymerized 2,2,4-trimethyl-1,2-dihydroquinoline and mixtures thereof, can be mentioned.

More preferred, the antioxidant is selected from the group of 4,4'-bis(1,1'dimethylbenzyl)diphenylamine, para-oriented styrenated diphenylamines, , 4,4'-thiobis (2-tert. butyl-5-methylphenol), polymerized 2,2,4-trimethyl-1,2-dihydroquinoline, or derivatives thereof.

More preferred, the antioxidant is selected from the group (but not limited to) of 4,4'- bis(1,1'dimethylbenzyl)diphenylamine, para-oriented styrenated diphenylamines, 4,4'-thiobis (2-tert. butyl-5-methylphenol), 2,2'-thiobis(6-t-butyl-4-methylphenol), distearylthiodipropionate, 2,2'-thio-diethyl-bis-(3-(3,5-di-tertbutyl-4-hydroxyphenyl)propionate, polymerized 2,2,4-trimethyl-1,2-dihydroquinoline, or derivatives thereof. Of course, not only one of the above-described antioxidants may be used but also any mixture thereof.

The amount of antioxidant, optionally a mixture of two or more antioxidants, can range from 0.005 to 2.5 wt-%, such as 0.01 to 2.5 wt-%, preferably 0.01 to 2.0 wt-%, more preferably 0.03 to 2.0 wt-%, especially 0.03 to 1.5 wt-%, more especially 0.05 to 1.5 wt%, or 0.1 to 1.5 wt% based on the weight of the semiconductive layer.

In some embodiments the amount of antioxidant is 0.05 to 1.5 wt%, preferably 0.05 to 1.0 wt%, more preferably 0.05 to 0.8 wt%, especially 0.05 to 0.6 wt%, more especially 0.05 to 0.5 wt% based on the weight of the insulation layer.

### Other components

The inner and/or outer semiconductive layer or the insulation layer may comprise further additives. As possible additives, scorch retarders, crosslinking boosters, stabilisers, processing aids, flame retardant additives, acid scavengers, inorganic fillers, voltage stabilizers, , or mixtures thereof can be mentioned.

A "scorch retarder" is defined to be a compound that reduces premature crosslinking i.e. the formation of scorch during extrusion. Besides scorch retarding properties, the scorch retarder may simultaneously result in further effects like boosting, i.e. enhancing crosslinking performance. The use of a scorch retarder in the insulation layer is especially preferred.

Useful scorch retarders can be selected from substituted or unsubstituted diphenylethylene, quinone derivatives, hydroquinone derivatives such as 2,5-ditert. butyl hydroquinone, monofunctional vinyl containing esters and ethers, or mixtures thereof. More preferably, the scorch retarder is selected from substituted or unsubstituted diphenylethylene, or mixtures thereof. A highly preferred option is 2,4-diphenyl-4-methyl-1-pentene.

Preferably, the amount of scorch retarder is within the range of 0.005 to 1.0 wt.-%, more preferably within the range of 0.01 to 0.8 wt.-%, based on the weight of the layer in question. Further preferred ranges are 0.03 to 0.75 wt-%, 0.05 to 0.50 wt%, 0.05 to 0.70 wt-% and 0.10 to 0.50 wt-%, based on the weight of the layer in question.

The crosslinking booster may be a compound containing at least 2, unsaturated groups, such as an aliphatic or aromatic compound, an ester, an ether, an amine, or a ketone, which contains at least 2, unsaturated group(s), such as a cyanurate, an isocyanurate, a phosphate, an ortho formate, an aliphatic or aromatic ether, or an allyl ester of benzene tricarboxylic acid. Examples of esters, ethers, amines and ketones are compounds selected from general groups of diacrylates, triacrylates, tetraacrylates, triallylcyanurate, triallylisocyanurate, 3,9-divinyl-2,4,8,10-tetra-oxaspiro[5,5]-undecane (DVS), triallyl trimellitate (TATM) or N,N,N',N',N",N"-hexaallyl-1,3,5-triazine-2,4,6-triamine (HATATA), or any mixtures thereof. The crosslinking booster can be added in an amount of such crosslinking less than 2.0 wt%, for example, less than 1.5 wt%, e.g. less than 1.0 wt%, for example, less than 0.75 wt%, e.g less than 0.5 wt%, and the lower limit thereof is, for example, at least 0.05 wt%, e.g., at least 0.1 wt%, based on the weight of the polymer composition.

In a further embodiment of the present invention the insulation layer contains no water tree retarders other than the Polymer Water tree retarder discussed herein

### Conductor

The cable of the invention comprises a conductor. The conductor can be made from any suitable conductive metal, such as copper or aluminium.

### Cable

A power cable is defined to be a cable transferring energy operating at any voltage, typically operating at voltages higher than 1 kV. The voltage applied to the power cable can be alternating (AC), direct (DC), or transient (impulse). Moreover, the cable is very advantageously an AC power cable, for example a cable operating at voltages of 1-525 kV, 6-525 kV, 6-275 kV, 6-220 kV, 6-150 kV, 6 -72 kV or 6 to 60 kV power cable (rms voltages, voltage between any two conductors in the three phase cable). In some embodiments, the cable is an AC power cable operating at voltages of higher than 1 kV, preferably higher than 6 kV. In some embodiments, the cable is an AC power cable operating at voltages of lower than 525 kV, preferably lower than 400 kV, more preferably lower than 380 kV, especially lower than 275 kV, lower than 220 kV, or even lower than 150 kV.

As well known the cable can optionally comprise further layers, e.g. layers surrounding the outer semiconductive layers, such as a jacketing layer. The presence of an impervious water barrier metal sheath layer is preferably avoided, i.e. the cable is a wet design cable.

A cable can be produced by the process comprising the steps of
(a)
   - providing and mixing, for example, melt mixing in an extruder, a crosslinkable first semiconductive composition for the inner semiconductive layer,
   - providing and mixing, for example, melt mixing in an extruder, a crosslinkable insulation composition for the insulation layer,
   - providing and mixing, for example, melt mixing in an extruder, a second semiconductive composition for the outer semiconductive layer,
(b) applying on a conductor, for example, by co-extrusion,
   - a melt mix of the first semiconductive composition obtained from step (a) to form the inner semiconductive layer,
   - a melt mix of insulation layer composition obtained from step (a) to form the insulation layer, and
   - a melt mix of the second semiconductive composition obtained from step (a) to form the outer semiconductive layer, and
(c) optionally crosslinking at crosslinking conditions one or more of the insulation layer, the inner semiconductive layer and the outer semiconductive layer, of the obtained cable.

It is preferred that if a peroxide is used in the manufacture of a layer of the cable then such a layer is crosslinked. The cable is therefore crosslinkable.

The first semiconductive composition for the inner semiconductive layer, crosslinkable insulation composition for the insulation layer, and the second semiconductive composition for the outer semiconductive layer comprise the components necessary to form the respective inner semiconductive, insulation and outer semiconductive layers of the cable.

The necessary polymer composition may be obtained by several means using several different production technologies such as, for example, internal mixers such as Banbury or Bolling, continuous single screws such as BUSS, or continuous twin screws such as Farrel or Werner & Pfleiderer. The type of mixer and the chosen operating conditions will have a direct impact on the melt quality and will affect final compound properties, such as melt flow rate, volume resistivity and surface smoothness. Of particular usefulness is the co-kneader technology (BUSS, X-compounds). In the preparation of the semiconductive layers, the conductive filler may be added to the polymer in the molten state with full control of the production temperature. With this technology, a blend with sufficiently evolved dispersive and distributive mixing can be achieved by a person skilled in the art.

It is preferred if all layers are crosslinked. The invention further provides therefore a crosslinked cable obtained by crosslinking cables defined herein.

The crosslinking procedure can be carried out at increased temperature such as above 150°C, e.g. 160 to 350°C.

Melt mixing means mixing above the melting point of at least the major polymer component(s) of the obtained mixture and is typically carried out in a temperature of at least 10-15°C above the melting or softening point of polymer component(s).

The term coextrusion means herein that all or part of the layer(s) are formed simultaneously using one or more extrusion heads. For instance a triple extrusion can be used for forming three layers.

In even further embodiments of the present invention, the insulation layer in the crosslinked cable of the invention has a Weibull Eb measured on a 20 kV cable after 1 yr wet aging in salt water as described below in the determination methods section of at least 55 kV/mm such as 55 to 75 kV/mm.

Moreover said first and second semiconductive compositions may, for example, be identical.

The thickness of the insulation layer of the power cable, for example, of the AC cable, is typically 2 mm or more, for example, at least 3 mm, at least 4 mm, e.g., of at least 5 to 100 mm, for example, from 5 to 50 mm, when measured from a cross section of the insulation layer of the cable.

The thickness of the inner and/or outer semiconductive layer of the power cable may typically be in the range of 0.5 mm or more, for example, 0.7 mm to 5.0 mm when measured from a cross section of the layer.

Viewed from another aspect the invention provides a cable comprising a conductor which is surrounded by at least an inner semiconductive layer, an insulation layer and an outer semiconductive layer in that order;
wherein said inner and/or outer semiconductive layer independently comprise:
at least 50 wt% of a LDPE copolymer with a polar comonomer selected from the group consisting of an alkyl acrylate, an alkyl methacrylate or vinyl acetate,
25-48 wt% carbon black; and
0.1-2.5 wt.% of a peroxide; and
wherein said insulation layer comprises
   ( i) at least 60 wt% of a low density polyethylene copolymer with at least one polyunsaturated comonomer and optionally one or more further comonomers;
   ( ii) 10 to 35 wt% of a low density polyethylene copolymer of ethylene and at least one polar comonomer selected from the group consisting of an alkyl acrylate, an alkyl methacrylate or vinyl acetate, preferably an alkylacrylate; and
   ( iii) 0.1-2.5 wt.% of a peroxide.

### Use

The cable of the invention is one that is especially adapted for use in a salt water environment. The cable may therefore be buried under the sea or may be located in the sea or on the sea bed. Cables that are buried in land but close to shore may also experience salt water environments underground. Cables that are used in tidal estuaries are also subject to salt water. There are also salt water lakes and salt water seas where cables of the invention would have utility, e.g. in such bodies of water or under such bodies of water. The cables of the invention are suitable for use in any salt water environment.

In one embodiment, the invention concerns a process comprising burying a cable as herein before defined under the sea.

In one embodiment, the invention concerns a process comprising laying a cable as herein defined on the seabed. Such a cable may therefore be dispensed from a spool. Such a process might involve a cable laying vessel.

The invention will now be described with reference to the following non-limiting examples.

### Determination methods

Unless otherwise stated in the description or experimental part the following methods were used for the property determinations.
wt%: % by weight

### Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylenes and may be determined at different loadings such as 2.16 kg (MFR₂) or 21.6 kg (MFR₂₁).

### Density

The density was measured according to ISO 1183-1 / method A. Sample preparation is done by compression moulding in accordance with ISO 17855-2 :2016.

### Comonomer contents

a) Quantification of alpha-olefin content in low density polyethylenes by NMR spectroscopy:
   The comonomer content was determined by quantitative 13C nuclear magnetic resonance (NMR) spectroscopy after basic assignment (J. Randall JMS - Rev. Macromol. Chem. Phys., C29(2&3), 201-317 (1989)). Experimental parameters were adjusted to ensure measurement of quantitative spectra for this specific task.
   Specifically solution-state NMR spectroscopy was employed using a Bruker AvanceIII 400 spectrometer. Homogeneous samples were prepared by dissolving approximately 0.200 g of polymer in 2.5 ml of deuterated-tetrachloroethene in 10 mm sample tubes utilising a heat block and rotating tube oven at 140 °C. Proton decoupled 13C single pulse NMR spectra with NOE (powergated) were recorded using the following acquisition parameters: a flip-angle of 90 degrees, 4 dummy scans, 4096 transients an acquisition time of 1.6s, a spectral width of 20kHz, a temperature of 125 °C, a bilevel WALTZ proton decoupling scheme and a relaxation delay of 3.0 s. The resulting FID was processed using the following processing parameters: zero-filling to 32k data points and apodisation using a gaussian window function; automatic zeroth and first order phase correction and automatic baseline correction using a fifth order polynomial restricted to the region of interest.
   Quantities were calculated using simple corrected ratios of the signal integrals of representative sites based upon methods well known in the art.
b) Determination of Comonomer content of polar comonomers in low density polyethylene Comonomer content (wt%) was determined in a known manner based on Fourier transform infrared spectroscopy (FTIR) determination calibrated with quantitative nuclear magnetic resonance (NMR) spectroscopy.
   Films were pressed using a Specac film press at 150°C, approximately at 5 tons, 1-2 minutes, and then cooled with cold water in a not controlled manner. The accurate thickness of the obtained film samples was measured.
   After the analysis with FTIR, base lines in absorbance mode were drawn for the peaks to be analysed. The absorbance peak for the comonomer was normalised with the absorbance peak of polyethylene. An FTIR peak height ratio was correlated to the polar comonomer content by reference materials determined by NMR. The NMR spectroscopy calibration procedure was undertaken in the conventional manner which is well documented in the literature.

Quantification of polar comonomer content in in polymers by NMR spectroscopy The polar comonomer content was determined by quantitative nuclear magnetic resonance (NMR) spectroscopy after basic assignment (e.g. "NMR Spectra of Polymers and Polymer Additives", A. J. Brandolini and D. D. Hills, 2000, Marcel Dekker, Inc. New York). Experimental parameters were adjusted to ensure measurement of quantitative spectra for this specific task (e.g "200 and More NMR Experiments: A Practical Course", S. Berger and S. Braun, 2004, Wiley-VCH, Weinheim). Quantities were calculated using simple corrected ratios of the signal integrals of representative sites in a manner known in the art.

Below is exemplified the determination of the polar comonomer content of ethylene ethyl acrylate, ethylene butyl acrylate and ethylene methyl acrylate.
The weight-% can be converted to mol-% by calculation. It is well documented in the literature.

### (1) Ethylene copolymers containing butyl acrylate

Film samples of the polymers were prepared for the FTIR measurement: 0.5-0.7 mm thickness was used for ethylene butyl acrylate >6 wt% butylacrylate content and 0.05 to 0.12 mm thickness was used for ethylene butyl acrylate <6 wt % butylacrylate content.

After the FT-IR analysis the maximum absorbance for the peak for the butyl acrylate >6 wt% at 3450 cm⁻¹ was subtracted with the absorbance value for the base line at 3510 cm⁻¹ (A_{butylacrylate} - A₃₅₁₀). Then the maximum absorbance peak for the polyethylene peak at 2020 cm⁻¹ was subtracted with the absorbance value for the base line at 2120 cm⁻¹ (A₂₀₂₀ - A₂₁₂₀). The ratio between (A_{butylacrylate}-A₃₅₁₀) and (A₂₀₂₀-A₂₁₂₀) was then calculated in the conventional manner which is well documented in the literature.

The maximum absorbance for the peak for the comonomer butylacrylate <6 wt% at 1165 cm⁻¹ was subtracted with the absorbance value for the base line at 1865 cm⁻¹ (A_{butyl acrylate} - A₁₈₆₅). Then the maximum absorbance peak for polyethylene peak at 2660 cm⁻¹ was subtracted with the absorbance value for the base line at 1865 cm⁻¹ (A₂₆₆₀ - A₁₈₆₅). The ratio between (A_{butyl acrylate}-A₁₈₆₅) and (A₂₆₆₀-A₁₈₆₅) was then calculated.

### (2) Ethylene copolymers containing ethyl acrylate

Film samples of the polymers were prepared for the FTIR measurement: 0.5 mm thickness was used for ethylene ethyl acrylate.

After the FT-IR analysis the maximum absorbance for the peak for the ethyl acrylate at 3450 cm⁻¹ with linear baseline correction applied between approximately 3205 and 3295 cm⁻¹ (A_{ethylacrylate}) was determined. Then the maximum absorbance peak for the polyethylene peak at 2020 cm⁻¹ with linear baseline correction applied between approximately 1975 and 2120 cm⁻¹ was determined (A₂₀₂₀). The ratio between (A_{ethylacrylate}) and (A₂₀₂₀) was then calculated in the conventional manner which is well documented in the literature.

### (3) Ethylene copolymers containing methyl acrylate

Film samples of the polymers were prepared for the FTIR measurement: 0.1 mm thickness was used for ethylene methyl acrylate >8 wt% methyl acrylate content and 0.05 thickness was used for ethylene methyl acrylate <8 wt% methyl acrylate content. After the analysis the maximum absorbance for the peak for the methyl acrylate >8 wt% at 3455 cm⁻¹ was subtracted with the absorbance value for the base line at 3510 cm⁻¹ (A_{methylacrylate} - A₃₅₁₀). Then the maximum absorbance peak for the polyethylene peak at 2675 cm⁻¹ was subtracted with the absorbance value for the base line at 2450 cm⁻¹ (A₂₆₇₅ - A₂₄₅₀). The ratio between (A_{methylacrylate}-A₃₅₁₀) and (A₂₆₇₅-A₂₄₅₀) was then calculated in the conventional manner which is well documented in the literature.

The maximum absorbance for the peak for the comonomer methyl acrylate <8 wt% at 1164 cm⁻¹ was subtracted with the absorbance value for the base line at 1850 cm⁻¹ (A_{methyl acrylate} - A₁₈₅₀). Then the maximum absorbance peak for polyethylene peak at 2665 cm⁻¹ was subtracted with the absorbance value for the base line at 1850 cm⁻¹ (A₂₆₆₅ - A₁₈₅₀). The ratio between (A_{methyl acrylate}-A₁₈₅₀) and (A₂₆₆₅-A₁₈₅₀) was then calculated.

### Methods ASTM D3124-98, and ASTM D6248-98, to determine amount of double bonds in the polymer, i.e. the polyethylene

The methods ASTM D3124-98 and ASTM D6248-98 apply for determination of double bonds in the LDPE component (i). The LDPE component (i) in this method description, referred to as "the polymer".

The methods ASTM D3124-98, and ASTM D6248-98, include on one hand a procedure for the determination of the amount of double bonds/1000 C-atoms which is based upon the ASTM D3124-98 method. In the ASTM D3124-98 method, a detailed description for the determination of vinylidene groups/1000 C-atoms is given based on 2,3-dimethyl-1,3-butadiene. In the ASTM D6248-98 method, detailed descriptions for the determination of vinyl and *trans*-vinylene groups/1000 C-atoms are given based on 1-octene and *trans*-3-hexene, respectively. The described sample preparation procedures therein have here been applied for the determination of vinyl groups/1000 C-atoms, vinylidene groups/1000 C-atoms and *trans*-vinylene groups/1000 C-atoms in the present invention. The ASTM D6248-98 method suggests possible inclusion of the bromination procedure of the ASTM D3124-98 method but the samples with regard to the present invention were not brominated. For the determination of the extinction coefficient for these three types of double bonds, the following three compounds have been used: 1-decene for vinyl, 2-methyl-1-heptene for vinylidene and *trans*-4-decene for trans-vinyleneand the procedures as described in ASTM D3124-98 and ASTM-D6248-98 were followed with the above-mentioned exception.

The total amount of vinyl bonds, vinylidene bonds and *trans*-vinylene double bonds of "the polymer" was analysed by means of IR spectrometry and given as the amount of vinyl bonds, vinylidene bonds and *trans*-vinylene bonds per 1000 carbon atoms.

The polymer to be analysed were pressed to thin films with a thickness of 0.5-1.0 mm. The actual thickness was measured. FT-IR analysis was performed on a Perkin Elmer Spectrum One. Two scans were recorded with a resolution of 4 cm⁻¹.

### 1) Polymer compositions comprising polyethylene homopolymers and copolymers or polyethylene homopolymers and copolymers, except polyethylene copolymers with > 0.4 wt% polar comonomer

For polyethylenes three types of C=C containing functional groups were quantified, each with a characteristic absorption and each calibrated to a different model compound resulting in individual extinction coefficients:
- vinyl (R-CH=CH2) via 910 cm⁻¹ based on 1-decene [dec-1-ene] giving E = 13.13 l·mol⁻¹·mm⁻¹
- vinylidene (RR'C=CH2) via 888 cm⁻¹ based on 2-methyl-1-heptene [2-methyhept-1-ene]giving E = 18.24 l·mol⁻¹·mm⁻¹
- trans-vinylene (R-CH=CH-R') via 965 cm⁻¹ based on trans-4-decene [(E)-dec-4-ene] giving E = 15.14 l·mol⁻¹·mm⁻¹

For polyethylene homopolymers or copolymers with < 0.4 wt% of polar comonomer linear baseline correction was applied between approximately 980 and 840 cm⁻¹.

### 2) Polymer compositions comprising polyethylene copolymers or polyethylene copolymers with > 0.4 wt% polar comonomer

For polyethylene copolymers with > 0.4 wt% of polar comonomer two types of C=C containing functional groups were quantified, each with a characteristic absorption and each calibrated to a different model compound resulting in individual extinction coefficients:
- vinyl (R-CH=CH2) via 910 cm⁻¹ based on 1-decene [dec-1-ene] giving E = 13.13 l·mol⁻¹·mm⁻¹
- vinylidene (RR'C=CH2) via 888 cm⁻¹ based on 2-methyl-1-heptene [2-methyhept-1-ene] giving E = 18.24 l·mol⁻¹·mm⁻¹
   EBA:
      For poly(ethylene-co-butylacrylate) (EBA) systems linear baseline correction was applied between approximately 920 and 870 cm⁻¹.
   EEA:
      For poly(ethylene-co-ethylacrylate) (EEA) systems linear baseline correction was applied between approximately 920 and 825 cm⁻¹.
   EMA:
      For poly(ethylene-co-methylacrylate) (EMA) systems linear baseline correction was applied between approximately 930 and 870 cm⁻¹.

The methods ASTM D3124-98, and ASTM D6248-98, include on the other hand also a procedure to determine the molar extinction coefficient. At least three 0.18 mol•l⁻¹ solutions in carbon disulphide (CS₂) were used and the mean value of the molar extinction coefficient used.

The amount of vinyl groups originating from the polyunsaturated comonomer per 1000 carbon atoms was determined and calculated as follows:
The polymer to be analysed and a reference polymer have been produced on the same reactor, basically using the same conditions, i.e. similar peak temperatures, pressure and production rate, but with the only difference that the polyunsaturated comonomer is added to the polymer to be analysed and not added to reference polymer. The total amount of vinyl groups of each polymer was determined by FT-IR measurements, as described herein. Then, it is assumed that the base level of vinyl groups, i.e. the ones formed by the process and from chain transfer agents resulting in vinyl groups (if present), is the same for the reference polymer and the polymer to be analysed with the only exception that in the polymer to be analysed also a polyunsaturated comonomer is added to the reactor. This base level is then subtracted from the measured amount of vinyl groups in the polymer to be analysed, thereby resulting in the amount of vinyl groups/1000 C-atoms, which result from the polyunsaturated comonomer.

### Wet ageing test

The ageing properties of the cables in salt water are evaluated using of the Regime A procedure described in Cigre technical brochure 722 "Recommendations for additional testing for submarine cables from 6 kV (Um=7.2 kV) up to 60 kV (Um=72.5 kV)" issued in April 2018.

### Preconditioning:

The cable is immersed in a water tank for 500 hours at a temperature of 55°C. The NaCl content of the water is 3.5%.

### Ageing:

The cables are electrically aged in a water tank. The temperature of the water is 40°C and the applied 50 Hz voltage is 38.5 kV equal to 9.1 kV/mm conductor stress. The NaCl content of the water is 3.5%.

### AC breakdown test:

The AC breakdown tests after 1 year of ageing were performed in agreement with Cigre technical brochure 722 section 3.6.4.1 and HD 605 5.4.15.3.4 (b). The cable was thus cut into six test samples of 10 meter active length (terminations in addition). The samples were tested to breakdown with a 50 Hz AC step test within 72 hours after removal from the ageing tank, according to the following procedure:
- Start at 36 kV for 5 minutes
- Voltage increasing in step of 12 kV every 5 minutes until breakdown occurs The calculation of the Weibull parameters of the data set of six breakdown values follows the least squares regression procedure as described in IEC 62539 (2007).

### Experimental part

The following materials were used in these examples:
EEA 1 is an ethylene copolymer with 15wt% of ethyl acrylate comonomer produced in a high pressure radical process. The MFR₂ is around 7 g/10min.
LDPE1 An (LDPE copolymer (an ethylene-1,7-octadiene copolymer) with a vinyl content around 0.55 vinyl/1000 C and MFR₂ around 2 g/10 min) produced in a high pressure process.
DCP: dicumyl peroxide

Two 20 kV cables having the following dimensions (described below) were extruded on a pilot CCV line using a line speed of 2.79 m/min and the following temperatures on the heating zones: 460/400/385/375 °C in the vulcanizing tube and then the cable core is cooled with water. The same semiconductive layers have been used in the two 20 kV cables (around 5.5 mm insulation thickness) both for the inventive example as the comparative example.

The inner and outer semiconductive layers comprise LE0595 supplied by Borealis (which contains carbon black and peroxide). The cables have the following dimensions:
150 mm² Al conductor
Inner semicon layer: around 1 mm thick
Insulation layer: 5.5-5.6 mm thick
Outer semicon layer: around 0.8 mm thick

**Table 1 - insulation composition (wt%)**

| | Polymer composition of insulation layer |
|---|---|
| EEA 1 | 23.3 |
| LDPE1 | 76.5 |
| Antioxidant CAS (96-69-5) | 0.2 |
| To the composition above the components below are added | |
| Scorch retarder CAS 6362-80-7 | 0.4 |
| DCP | 1.7 |

The insulation layer in the comparative example is LE4212 which is a crosslinkable additive WTR retardant material supplied by Borealis. The electrical breakdown strength was determined for the inventive and comparative 20 kV cables after 1 year of wet ageing in salt water as described above.

In the 1 year test results after Eb testing it can be seen that there is a clear benefit by using the polymer WTR over the additive WTR. In the polymer WTR insulated cable the Weibull Eb(63.2%) value is 64.1 kV/mm after 1 year of wet ageing.

In the additive WTR insulated cable the Weibull Eb (63.2%) value is 51.2 kV/mm after 1 year of wet ageing. These breakdown strength values refer to the electric stress at conductor stress when breakdown occurs. This clearly shows the benefit of the polymer WTR composition when tested in long term wet ageing tests in a salt water environment. The Table 2 below summarises measured Eb values.

**Table 2 AC Breakdown strength after 1 year of wet ageing according to Cigre TB722**

| Sample | Test conditions | Cable design | Weibull Eb (63.2%) (kV/mm) | Arithmetic Eb mean (kV/mm) | Lowest Eb/Highest Eb (kV/mm) |
|---|---|---|---|---|---|
| Inventive example Polymer WTR insulation system | Salt water Conductor stress 9.1 kV/mm | 20 kV cable | 64.1 | 61.6 | 48.3/68.3 |
| Comparative example Additive WTR insulation system | Salt water Conductor stress 9.1 kV/mm | 20 kV cable | 51.2 | 48.9 | 42.3/56.4 |

## Claims

1. Use of a cable, e.g. to carry power, in a salt water environment, e.g. in the sea or under the sea;
said cable comprising a conductor which is surrounded by at least an inner semiconductive layer, an insulation layer and an outer semiconductive layer in that order;
wherein said insulation layer comprises
(i) at least 60 wt% of a low density polyethylene homo or low density polyethylene copolymer with at least one polyunsaturated comonomer and optionally one or more further comonomers; and,
(ii) 10 to 35 wt% of a low density polyethylene copolymer of ethylene and at least one polar comonomer selected from the group consisting of an alkyl acrylate, an alkyl methacrylate or vinyl acetate.

2. A cable, such as a crosslinkable, comprising a conductor which is surrounded by at least an inner semiconductive layer, an insulation layer and an outer semiconductive layer in that order;
wherein said insulation layer comprises
(i) at least 60 wt% of a low density polyethylene homopolymer or low density polyethylene copolymer with at least one polyunsaturated comonomer and optionally one or more further comonomers; and,
(ii) 10 to 35 wt% of a low density polyethylene copolymer of ethylene and at least one polar comonomer selected from the group consisting of an alkyl acrylate, an alkyl methacrylate or vinyl acetate; and
wherein said inner and outer semiconductive layers independently comprise:
(a) a low density polyethylene copolymer of ethylene and at least one polar comonomer selected from the group consisting of an alkyl acrylate, an alkyl methacrylate or vinyl acetate; and
(b) carbon black.

3. The cable as claimed in claim 2 wherein the inner semiconductive layer has the same chemical composition as the outer semiconductive layer.

4. The cable as claimed in claim 2 to 3 wherein the inner and/or outer semiconductive layer comprises an ethylene alkyl acrylate or ethylene vinyl acetate copolymer.

5. The cable as claimed in claim 2 to 4 wherein component (ii) of the insulation layer is an ethylene alkyl acrylate copolymer.

6. The cable as claimed in claim 4 or 5 wherein the ethylene alkyl acrylate copolymer is ethylene methyl acrylate or ethylene butyl acrylate.

7. The cable as claimed in claim 2 to 5, wherein the polyunsaturated comonomer of the LDPE copolymer component (i) is a straight carbon chain with at least 8 carbon atoms and at least 4 carbons between the non-conjugated double bonds, of which at least one is terminal.

8. The cable as claimed in claim 2 to 7, wherein the polyunsaturated comonomer of the LDPE copolymer component (i) is C₈- to C₁₄-non-conjugated diene, preferably selected from 1,7-octadiene, 1,9-decadiene, 1,11-dodecadiene, 1,13-tetradecadiene, 7-methyl-1,6-octadiene, 9-methyl-1,8-decadiene, or mixtures thereof.

9. The cable as claimed in claim 2 to 8 wherein the insulation layer, inner and outer semiconductive layer comprise peroxide.

10. The cable as claimed in claim 2 to 9 wherein the conductor comprises aluminium.

11. The cable as claimed in claim 2 to 10 being a wet design cable.

12. A cable as claimed in claim 2 to 11 comprising a conductor which is surrounded by at least an inner semiconductive layer, an insulation layer and an outer semiconductive layer in that order;
wherein said inner and/or outer semiconductive layer independently comprise:
(a) at least 50 wt% of a LDPE copolymer with a polar comonomer selected from the group consisting of an alkyl acrylate, an alkyl methacrylate or vinyl acetate,
(b) 25-48 wt% carbon black; and
(c) 0.1-2.5 wt.% of a peroxide; and
wherein said insulation layer comprises
(i) at least 60 wt% of a low density polyethylene homopolymer or a low density polyethylene copolymer with at least one polyunsaturated comonomer and optionally one or more further comonomers;
(ii) 10 to 35 wt% of a low density polyethylene copolymer of ethylene and at least one polar comonomer selected from the group consisting of an alkyl acrylate, an alkyl methacrylate or vinyl acetate; and
(iii) 0.1-2.5 wt.% of a peroxide.

13. A crosslinked cable obtainable by the crosslinking of the cable of claim 2 to 12.

14. The crosslinked cable as claimed in claim 13 wherein the Weibull Eb value is at least 55 kV/mm after 1 year when measured on a 20 kV cable as described under "Determination methods".

15. The crosslinked cable as claimed in claim 13 or 14 being an AC power cable.

16. Use of a cable as claimed in any one of the claims 2 to 12 or a crosslinked cable as claimed in any one of claims 13 to 15 in a salt water environment, e.g. to carry power in a salt water environment.

17. A process comprising burying a cable as claimed in claim 2 to 12 or a crosslinked cable of claims 13 to 15 under the sea or a process comprising laying a cable as claimed in claim 2 to 12 or a crosslinked cable of claims 13 to 15 on the seabed.

18. Use as claimed in claim 1 or 16 wherein said cable is in or under the sea.
